# EUROPEAN PATENT SPECIFICATION

(11) **EP 2 618 492 B1**
(45) Date of publication and mention of the grant of the patent: **12.03.2014**
(21) Application number: 12151978.9
(22) Date of filing: 20.01.2012
(51) Int. Cl.: H04B 1/04

(54) **Mobile wireless communications device with impedance matching and related methods**
Mobile drahtlose Kommunikationsvorrichtung mit Impedanzanpassung und zugehörige Verfahren
Dispositif de communications sans fil mobiles doté d'une correspondance d'impédance et procédés correspondants

(43) Date of publication of application: 24.07.2013
(73) Proprietor: BlackBerry Limited, Waterloo, ON N2K 0A7 (CA)
(72) Inventor: Devison, Stephen Arnold, Waterloo, Ontario N2L 3W8 (CA)
(74) Representative: Greenaway, Martin William

(56) References cited:
- US-A1- 2007 142 014
- US-A1- 2008 280 571
- US-A1- 2009 253 385
- US-A1- 2011 086 600

## Description

### Technical Field

This application relates to the field of communications, and more particularly, to wireless communications systems and related methods.

### Background

Mobile communication systems continue to grow in popularity and have become an integral part of both personal and business communications. Various mobile devices now incorporate Personal Digital Assistant (PDA) features such as calendars, address books, task lists, calculators, memo and writing programs, media players, games, etc. These multi-function devices usually allow electronic mail (email) messages to be sent and received wirelessly, as well as access the Internet via a cellular network and/or a wireless local area network (WLAN), for example.

Cellular devices have radio frequency (RF) processing circuits and receive or transmit radio communications signals typically using modulation schemes. In the typical device, the RF processing circuits may include a modulator, a power amplifier coupled downstream from the modulator, and an antenna coupled downstream from the power amplifier. Depending on the immediate surroundings of the cellular device, the impedance load of the antenna may vary, which can impact antenna performance.

Some cellular devices include an impedance matching device between the antenna and the power amplifier to compensate for the impedance mismatches. One drawback to this approach is that a phase change is imparted onto the transmitted signal. Depending on the wireless protocol being used, this may cause issues with the receiver device.

United States Publication No. 2009/0253385 discloses methods and apparatus for automatically adjusting antenna impedance match in a wireless transceiver employing phase-amplitude modulation.

Aspects of an invention are defined in the appended independent claims.

### Brief Description of the Drawings

FIG. 1 is a schematic block diagram of an example embodiment of a mobile wireless communications device.
FIG. 2 is a more detailed schematic block diagram of the mobile wireless communications device of FIG. 1.
FIG. 3 is a flowchart illustrating operation of the mobile wireless communications device of FIG. 1.
FIG. 4 is a schematic block diagram illustrating example components for the mobile wireless communications device of FIG. 1

### Detailed Description of the Preferred Embodiments

The present description is made with reference to the accompanying drawings, in which embodiments are shown. However, many different embodiments may be used, and thus the description should not be construed as limited to the embodiments set forth herein. Rather, these embodiments are provided so that this disclosure will be thorough and complete. Like numbers refer to like elements throughout.

Generally speaking, a mobile wireless communications device may include a processor configured to generate a baseband signal, a modulator coupled downstream from the processor, and a power amplifier coupled downstream from the modulator. The mobile wireless communications device may also include an antenna, and a tunable antenna matching network coupled between the power amplifier and the antenna and configured to match an impedance of the antenna and thereby causing a phase change in an output from the antenna. The processor may be configured to provide upstream phase change compensation in the baseband signal for the phase change in the output from the antenna.

More specifically, the mobile wireless communications device may further comprise a feedback path between the tunable antenna matching network and the processor. The tunable antenna matching network may be configured to dynamically match the impedance of the antenna. The processor may be configured to provide the upstream phase change compensation based upon an inverse of the phase change in the output from the antenna.

The processor may be configured to provide the upstream phase change compensation substantially simultaneously with the phase change in the output from the antenna. Furthermore, the tunable antenna matching network may be configured to match the impedance of the antenna substantially instantaneously.

In some embodiments, the processor may be configured to generate digital baseband In-phase (I) and Quadrature (Q) signals. The modulator may comprise I and Q circuits coupled between the processor and the power amplifier. Also, each of the I and Q circuits may comprise a digital-to-analog converter (DAC), a low pass filter coupled to an output of the DAC, and a mixer coupled to an output of the low pass filter. Additionally, the mobile wireless communications device may further comprise an antenna switch coupled between the power amplifier and the antenna.

Another aspect is directed to a method of providing impedance matching in a mobile wireless communications device. The mobile wireless communications device may comprise a processor generating a baseband signal, a modulator coupled downstream from the processor, a power amplifier coupled downstream from the modulator, an antenna, and a tunable antenna matching network coupled between the power amplifier and the antenna. The method may include matching an impedance of the antenna and thereby causing a phase change in an output from the antenna using the tunable antenna matching network, and providing upstream phase change compensation in the baseband signal for the phase change in the output from the antenna.

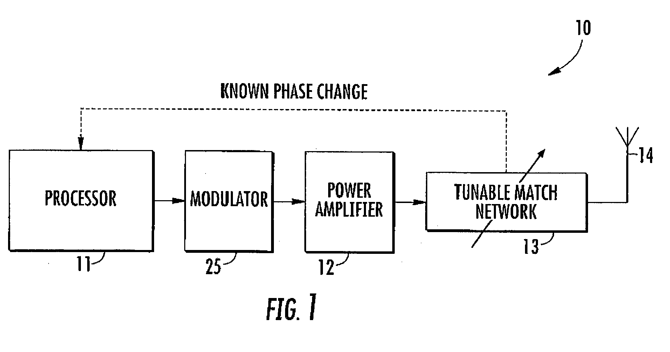

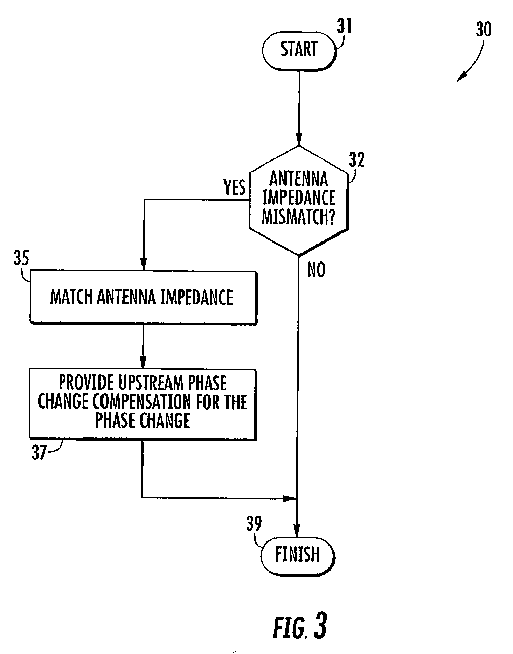

Referring now to FIG. 1, a mobile wireless communications device **10** according to the present disclosure is now described. Moreover, with reference additionally to FIG. 3, a flowchart **30** illustrates a method of operating the mobile wireless communications device **10** (Block **31).** Example mobile wireless communications devices may include portable or personal media players (e.g., music or MP3 players, video players, etc.), remote controls (e.g., television or stereo remotes, etc.), portable gaming devices, portable or mobile telephones, smartphones, tablet computers, etc.

The mobile wireless communications device **10** illustratively includes a processor 11 configured to generate a baseband signal, a modulator **25** coupled downstream from the processor, and a power amplifier **12** coupled downstream from the modulator. The mobile wireless communications device **10** illustratively includes an antenna **14,** and a tunable antenna matching network **13** coupled between the power amplifier **12** and the antenna.

During use, the immediate environment of the mobile wireless communications device **10** may cause changes in the load impedance of the antenna **14.** For example, the position of the user's hand may unintentionally change the impedance of the antenna **14** and cause degraded performance, or the user may place the mobile wireless communications device **10** on a flat metallic surface, such as a desk. To compensate for this occurrence, the tunable antenna matching network **13** is configured to match an impedance of the antenna **14,** which causes a phase change in an output from the antenna **14** (Blocks **33 &** 35). In some communication protocols, such as 3GPP Long Term Evolution (LTE), there is a threshold/limit to the amount of phase change in a transmitted signal from a device. Accordingly, in typical devices, due to phase change resulting from the typical impedance matching operations, the typical device limits the speed of impedance matching so as not to violate the communication protocol phase change threshold. Of course, this may result in poor performance while the device moves to match antenna impedance.

In the illustrated embodiment, the mobile wireless communications device **10** includes a feedback path between the tunable antenna matching network **13** and the processor **11.** Using this feedback path, the tunable antenna matching network **13** communicates the phase change in the transmitted signal. The processor **11** is configured to provide upstream phase change compensation in the baseband signal for the phase change in the output from the antenna **14** based upon the data from the feedback path (Block **37).** More specifically, the tunable antenna matching network **13** is configured to dynamically match the impedance of the antenna **14,** i.e. matching the impedance in real time and as fast as possible. Advantageously, the processor **11** is configured to provide the upstream phase change compensation substantially simultaneously with the phase change in the output from the antenna **14.** Furthermore, the tunable antenna matching network **13** is configured to match the impedance of the antenna **14** substantially instantaneously.

More specifically, the speed of phase change within the tunable antenna matching network **13** can be very fast. This is the reason why the typical device slows down the matching process. For example, 3GPP wideband code division multiple access (WCDMA) allows no more than 30 degrees of phase change within any 666.66 micro-second period. Furthermore, phase changes larger than 30 degrees can only happen once in any 3 milli-second period, and phase changes larger than 60 degrees are never allowed. In the mobile wireless communications device **10,** the processor 11 would be configured to simultaneously change the match and correct the phase on the order of 1 micro-second. This allows the matching to be applied substantially faster than otherwise possible.

For example, the processor **11** may be configured to provide the upstream phase change compensation based upon an inverse of the phase change in the output from the antenna **14.** In some embodiments, since both magnitude and phase of the antenna impedance match are unknown, these two pieces of information are needed to calculate the required impedance match. The required phase and magnitude change can be calculated using the forward and reverse voltage waveforms from a directional coupler (not shown), which is placed before the antenna **14.** The antenna reflection coefficient is a function of the complex load impedance and the complex source impedance, and can be shown as: Γ= (Z_{L}-Z_{O})/ (Z_{L}+Z_{O}) = Eᵣ/Eᵢ.

Eᵣ and Eᵢ are the reflected and incident voltages captured from the directional coupler. With Zₒ, Eᵣ, and Ei known, the load is calculated as: Z_{L} = -Z_{O} * (Γ+1)/(Γ-1). Due to the slowly varying nature of the antenna match, these values can be monitored at separate times, requiring only one transducer to digitize the values for calculation. The coupled RF can be downconverted via an auxiliary receiver and analog-to-digital converter. with Z_{L} known, the difference in phase from the previous Z_{L} (Z_{L'}) can be calculated. If the new antenna match is updated instantaneously, the RF phase will also change by the difference between Z_{L} and Z_{L'}, but if the opposite phase correction is applied upstream in the digital chain (e.g. at the processor **11),** the RF will not contain any phase change. Accordingly, the antenna impedance match can be immediately applied to the antenna **14** without violating the need for small instantaneous phase changes in the RF (Block **39).**

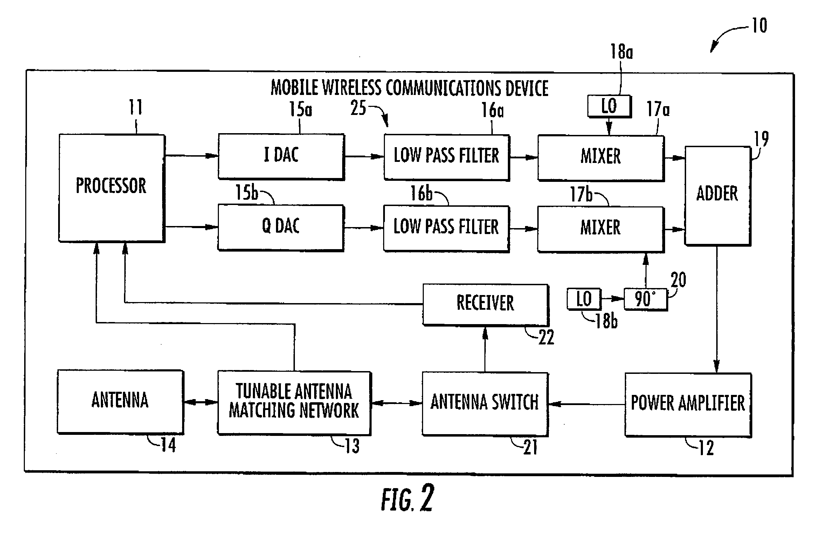

Referring additionally to FIG. 2, the processor **11** is configured to generate digital baseband I and Q signals. The modulator **25** illustratively includes I and Q circuits coupled between the processor **11** and the power amplifier **12.** Also, each of the I and Q circuits illustratively includes a DAC **15a-15b,** a low pass filter **16a-16b** coupled to an output of the DAC, and a mixer **17a-17b** coupled to an output of the low pass filter. The I circuit includes a local oscillator **18a** coupled to the mixer **17a,** and the Q circuit includes a local oscillator **18b,** and a 90 degrees phase chance block **20** coupled downstream therefrom and to the mixer **17b.** The mobile wireless communications device **10** illustratively includes an adder **19** configured to combine the modulated I and Q signals, an antenna switch **21** coupled between the power amplifier **12** and the antenna, and a receiver block **22** coupled between the antenna switch **21** and the processor **11.**

Another aspect is directed to a method of providing impedance matching in a mobile wireless communications device **10.** The mobile wireless communications device **10** may comprise a processor **11** generating a baseband signal, a modulator **25** coupled downstream from the processor, a power amplifier **12** coupled downstream from the modulator, an antenna **14,** and a tunable antenna matching network **13** coupled between the power amplifier and the antenna. The method may include matching an impedance of the antenna **14** and thereby causing a phase change in an output from the antenna using the tunable antenna matching network **13,** and providing upstream phase change compensation for the phase change in the output from the antenna.

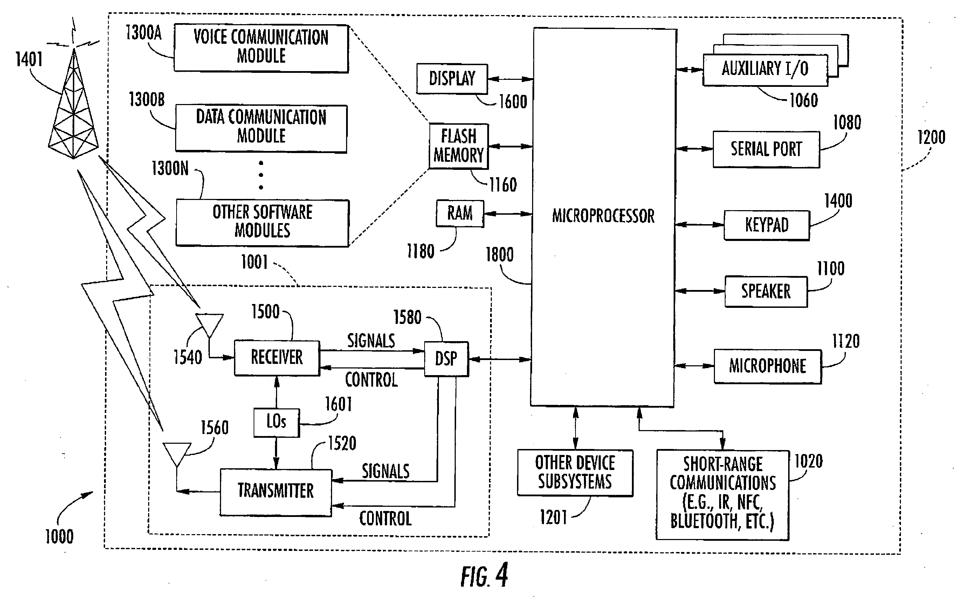

Example components of a mobile wireless communications device **1000** that may be used in accordance with the above-described embodiments are further described below with reference to FIG. 4. The device **1000** illustratively includes a housing **1200,** a keyboard or keypad **1400** and an output device **1600.** The output device shown is a display **1600,** which may comprise a full graphic liquid crystal display (LCD). Other types of output devices may alternatively be utilized. A processing device **1800** is contained within the housing **1200** and is coupled between the keypad **1400** and the display **1600.** The processing device **1800** controls the operation of the display **1600,** as well as the overall operation of the mobile device **1000,** in response to actuation of keys on the keypad **1400.**

The housing **1200** may be elongated vertically, or may take on other sizes and shapes (including clamshell housing structures). The keypad may include a mode selection key, or other hardware or software for switching between text entry and telephony entry.

In addition to the processing device **1800,** other parts of the mobile device **1000** are shown schematically in FIG. 4. These include a communications subsystem **1001;** a short-range communications subsystem **1020;** the keypad **1400** and the display **1600,** along with other input/output devices **1060, 1080, 1100** and **1120;** as well as memory devices **1160,** 1180 and various other device subsystems **1201.** The mobile device **1000** may comprise a two-way RF communications device having data and, optionally, voice communications capabilities. In addition, the mobile device **1000** may have the capability to communicate with other computer systems via the Internet.

Operating system software executed by the processing device **1800** is stored in a persistent store, such as the flash memory **1160,** but may be stored in other types of memory devices, such as a read only memory (ROM) or similar storage element. In addition, system software, specific device applications, or parts thereof, may be temporarily loaded into a volatile store, such as the random access memory (RAM) **1180.** Communications signals received by the mobile device may also be stored in the RAM **1180.**

The processing device **1800,** in addition to its operating system functions, enables execution of software applications **1300A-1300N** on the device **1000.** A predetermined set of applications that control basic device operations, such as data and voice communications **1300A** and **1300B,** may be installed on the device **1000** during manufacture. In addition, a personal information manager (PIM) application may be installed during manufacture. The PIM may be capable of organizing and managing data items, such as e-mail, calendar events, voice mails, appointments, and task items. The PIM application may also be capable of sending and receiving data items via a wireless network **1401.** The PIM data items may be seamlessly integrated, synchronized and updated via the wireless network **1401** with corresponding data items stored or associated with a host computer system.

Communication functions, including data and voice communications, are performed through the communications subsystem **1001,** and possibly through the short-range communications subsystem **1020.** The communications subsystem **1001** includes a receiver **1500,** a transmitter **1520,** and one or more antennas **1540** and **1560.** In addition, the communications subsystem **1001** also includes a processing module, such as a digital signal processor (DSP) **1580,** and local oscillators (LOs) **1601.** The specific design and implementation of the communications subsystem **1001** is dependent upon the communications network in which the mobile device **1000** is intended to operate. For example, a mobile device **1000** may include a communications subsystem **1001** designed to operate with the Mobitex^{™}, Data TAC^{™} or General Packet Radio Service (GPRS) mobile data communications networks, and also designed to operate with any of a variety of voice communications networks, such as Advanced Mobile Phone System (AMPS), time division multiple access (TDMA), code division multiple access (CDMA), Wideband code division multiple access (W-CDMA), personal communications service (PCS), GSM (Global System for Mobile Communications), enhanced data rates for GSM evolution (EDGE), etc. Other types of data and voice networks, both separate and integrated, may also be utilized with the mobile device 1000. The mobile device **1000** may also be compliant with other communications standards such as 3GSM, 3rd Generation Partnership Project (3GPP), Universal Mobile Telecommunications System (UMTS), 4G, etc.

Network access requirements vary depending upon the type of communication system. For example, in the Mobitex and DataTAC networks, mobile devices are registered on the network using a unique personal identification number or PIN associated with each device. In GPRS networks, however, network access is associated with a subscriber or user of a device. A GPRS device therefore typically involves use of a subscriber identity module, commonly referred to as a SIM card, in order to operate on a GPRS network.

When required network registration or activation procedures have been completed, the mobile device **1000** may send and receive communications signals over the communication network **1401.** Signals received from the communications network **1401** by the antenna **1540** are routed to the receiver **1500,** which provides for signal amplification, frequency down conversion, filtering, channel selection, etc., and may also provide analog to digital conversion. Analog-to-digital conversion of the received signal allows the DSP **1580** to perform more complex communications functions, such as demodulation and decoding. In a similar manner, signals to be transmitted to the network **1401** are processed (e.g. modulated and encoded) by the DSP **1580** and are then provided to the transmitter **1520** for digital to analog conversion, frequency up conversion, filtering, amplification and transmission to the communication network **1401** (or networks) via the antenna **1560.**

In addition to processing communications signals, the DSP **1580** provides for control of the receiver **1500** and the transmitter **1520.** For example, gains applied to communications signals in the receiver **1500** and transmitter **1520** may be adaptively controlled through automatic gain control algorithms implemented in the DSP **1580.**

In a data communications mode, a received signal, such as a text message or web page download, is processed by the communications subsystem **1001** and is input to the processing device **1800.** The received signal is then further processed by the processing device **1800** for an output to the display **1600,** or alternatively to some other auxiliary I/O device **1060.** A device may also be used to compose data items, such as e-mail messages, using the keypad **1400** and/or some other auxiliary I/O device **1060,** such as a touchpad, a rocker switch, a thumb-wheel, or some other type of input device. The composed data items may then be transmitted over the communications network **1401** via the communications subsystem **1001.**

In a voice communications mode, overall operation of the device is substantially similar to the data communications mode, except that received signals are output to a speaker **1100,** and signals for transmission are generated by a microphone **1120.** Alternative voice or audio I/O subsystems, such as a voice message recording subsystem, may also be implemented on the device **1000.** In addition, the display **1600** may also be utilized in voice communications mode, for example to display the identity of a calling party, the duration of a voice call, or other voice call related information.

The short-range communications subsystem enables communication between the mobile device **1000** and other proximate systems or devices, which need not necessarily be similar devices. For example, the short-range communications subsystem may include an infrared device and associated circuits and components, a Bluetooth^{™} communications module to provide for communication with similarly-enabled systems and devices, or a NFC sensor for communicating with a NFC device or NFC tag via NFC communications.

Many modifications and other embodiments will come to the mind of one skilled in the art having the benefit of the teachings presented in the foregoing descriptions and the associated drawings. Therefore, it is understood that various modifications and embodiments are intended to be included within the scope of the appended claims.

## Claims

1. A mobile wireless communications device (10) comprising:
a processor (11) configured to generate a baseband signal;
a modulator (25) coupled downstream from said processor;
a power amplifier (12) coupled downstream from said modulator;
an antenna (14); and
a tunable antenna matching network (13) coupled between said power amplifier and said antenna and configured to match an impedance of said antenna and thereby causing a phase change in a transmitted signal output from said antenna;
said processor configured to provide upstream phase change compensation in the baseband signal for the phase change in the transmitted signal output from said antenna.

2. The mobile wireless communications device of claim 1 further comprising a feedback path between said tunable antenna matching network and said processor and configured to communicate the phase change in the transmitted signal output to said processor.

3. The mobile wireless communications device of claim 1 wherein said tunable antenna matching network is configured to dynamically match the impedance of said antenna.

4. The mobile wireless communications device of claim 1 wherein said processor is configured to provide the upstream phase change compensation based upon an inverse of the phase change in the transmitted signal output from said antenna.

5. The mobile wireless communications device of claim 1 wherein said processor is configured to provide the upstream phase change compensation substantially simultaneously with the phase change in the transmitted signal output from said antenna.

6. The mobile wireless communications device of claim 1 wherein said tunable antenna matching network is configured to match the impedance of said antenna substantially instantaneously.

7. The mobile wireless communications device of claim 1 wherein said processor is configured to generate digital baseband In-phase (I) and Quadrature (Q) signals.

8. The mobile wireless communications device of claim 7 wherein said modulator comprises I and Q circuits coupled between said processor and said power amplifier.

9. The mobile wireless communications device of claim 8 wherein each of said I and Q circuits comprises a digital-to-analog converter (DAC) (15a-15b), a low pass filter (16a-16b) coupled to an output of said DAC, and a mixer (17a-17b) coupled to an output of said low pass filter.

10. A method of providing impedance matching in a mobile wireless communications device (10) comprising a processor (11) generating a baseband signal, a modulator (25) coupled downstream from the processor, a power amplifier (12) coupled downstream from the modulator, an antenna (14), and a tunable antenna matching network (13) coupled between the power amplifier and the antenna, the method comprising:
matching an impedance of the antenna and thereby causing a phase change in a transmitted signal output from the antenna using the tunable antenna matching network; and
providing upstream phase change compensation in the baseband signal for the phase change in the transmitted signal output from the antenna.

11. The method of claim 10 further comprising operating a feedback path between the tunable antenna matching network and the processor for communicating the phase change in the transmitted signal output to the processor.

12. The method of claim 10 further comprising using the tunable antenna matching network to dynamically match the impedance of the antenna.

13. The method of claim 10 further comprising using the processor to provide the upstream phase change compensation based upon an inverse of the phase change in the transmitted signal output from the antenna.

14. The method of claim 10 further comprising using the processor to provide the upstream phase change compensation substantially simultaneously with the phase change in the transmitted signal output from the antenna.

15. The method of claim 10 further comprising using the tunable antenna matching network to match the impedance of the antenna substantially instantaneously.

## Patentansprüche

1. Eine mobile drahtlose Kommunikationsvorrichtung (10), die aufweist:
einen Prozessor (11), der konfiguriert ist zum Erzeugen eines Basisbandsignals;
einen Modulator (25), der stromabwärts von dem Prozessor gekoppelt ist;
einen Leistungsverstärker (12), der stromabwärts von dem Modulator gekoppelt ist;
eine Antenne (14); und
ein abstimmbares Antennenanpassungsnetzwerk (13), das zwischen dem Leistungsverstärker und der Antenne gekoppelt ist und konfiguriert ist zum Anpassen einer Impedanz der Antenne und dadurch Veranlassen einer Phasenänderung in einer gesendeten Signalausgabe von der Antenne;
wobei der Prozessor konfiguriert ist zum Vorsehen einer Stromaufwärts-Phasenänderungs-Kompensation in dem Basisbandsignal für die Phasenänderung in der gesendeten Signalausgabe von der Antenne.

2. Die mobile drahtlose Kommunikationsvorrichtung gemäß Anspruch 1, die weiter einen Feedback- bzw. Rückkopplungspfad zwischen dem abstimmbaren Antennenanpassungsnetzwerk und dem Prozessor aufweist und konfiguriert ist zum Kommunizieren der Phasenänderung in der gesendeten Signalausgabe an den Prozessor.

3. Die mobile drahtlose Kommunikationsvorrichtung gemäß Anspruch 1, wobei das abstimmbare Antennenanpassungsnetzwerk konfiguriert ist zum dynamischen Anpassen der Impedanz der Antenne.

4. Die mobile drahtlose Kommunikationsvorrichtung gemäß Anspruch 1, wobei der Prozessor konfiguriert ist zum Vorsehen der Stromaufwärts-Phasenänderungs-Kompensation basierend auf einem Inversen der Phasenänderung in der gesendeten Signalausgabe von der Antenne.

5. Die mobile drahtlose Kommunikationsvorrichtung gemäß Anspruch 1, wobei der Prozessor konfiguriert ist zum Vorsehen der Stromaufwärts-Phasenänderungs-Kompensation im Wesentlichen gleichzeitig mit der Phasenänderung in der gesendeten Signalausgabe von der Antenne.

6. Die mobile drahtlose Kommunikationsvorrichtung gemäß Anspruch 1, wobei das abstimmbare Antennenanpassungsnetzwerk konfiguriert ist zum Anpassen der Impedanz der Antenne im Wesentlichen unverzüglich.

7. Die mobile drahtlose Kommunikationsvorrichtung gemäß Anspruch 1, wobei der Prozessor konfiguriert ist zum Erzeugen von digitalen Basisband-In-Phase(I)- und Quadratur(Q)-Signalen.

8. Die mobile drahtlose Kommunikationsvorrichtung gemäß Anspruch 7, wobei der Modulator I- und Q-Schaltungen aufweist, die zwischen dem Prozessor und dem Leistungsverstärker gekoppelt sind.

9. Die mobile drahtlose Kommunikationsvorrichtung gemäß Anspruch 8, wobei jede der I- und Q-Schaltungen einen Digital-Analog-Wandler (DACdigital to analog converter) (15a-15b), einen Tiefpassfilter (16a-16b), der mit einem Ausgang des DACs gekoppelt ist, und einen Mischer (17a-17b) aufweist, der mit einem Ausgang des Tiefpassfilters gekoppelt ist.

10. Ein Verfahren zum Vorsehen einer Impedanzanpassung in einer mobilen drahtlosen Kommunikationsvorrichtung (10), die aufweist einen Prozessor (11) zum Erzeugen eines Basisbandsignals, einen Modulator (25), der stromabwärts von dem Prozessor gekoppelt ist, einen Leistungsverstärker (12), der stromabwärts von dem Modulator gekoppelt ist, eine Antenne (14) und ein abstimmbares Antennenanpassungsnetzwerk (13), das zwischen dem Leistungsverstärker und der Antenne gekoppelt ist, wobei das Verfahren aufweist:
Anpassen einer Impedanz der Antenne und dadurch Veranlassen einer Phasenänderung in einer gesendeten Signalausgabe von der Antenne unter Verwendung des abstimmbaren Antennenanpassungsnetzwerks; und
Vorsehen einer Stromaufwärts-Phasenänderungs-Kompensation in dem Basisbandsignal für die Phasenänderung in der gesendeten Signalausgabe von der Antenne.

11. Das Verfahren gemäß Anspruch 10, das weiter aufweist ein Betreiben eines Feedback- bzw. Rückkopplungspfads zwischen dem abstimmbaren Antennenanpassungsnetzwerk und dem Prozessor zum Kommunizieren der Phasenänderung in der gesendeten Signalausgabe an den Prozessor.

12. Das Verfahren gemäß Anspruch 10, das weiter aufweist ein Verwenden des abstimmbaren Antennenanpassungsnetzwerks zum dynamischen Anpassen der Impedanz der Antenne.

13. Das Verfahren gemäß Anspruch 10, das weiter aufweist ein Verwenden des Prozessors zum Vorsehen der Stromaufwärts-Phasenänderungs-Kompensation basierend auf einem Inversen der Phasenänderung in der gesendeten Signalausgabe von der Antenne.

14. Das Verfahren gemäß Anspruch 10, das weiter aufweist ein Verwenden des Prozessors zum Vorsehen der Stromaufwärts-Phasenänderungs-Kompensation im Wesentlichen gleichzeitig mit der Phasenänderung in der gesendeten Signalausgabe von der Antenne.

15. Das Verfahren gemäß Anspruch 10, das weiter ein Verwenden des abstimmbaren Antennenanpassungsnetzwerks aufweist zum Anpassen der Impedanz der Antenne im Wesentlichen unverzüglich.

## Revendications

1. Dispositif de communication mobile sans fil (10) comprenant :
un processeur (11) configuré pour produire un signal en bande de base ;
un modulateur (25) couplé en aval dudit processeur ;
un amplificateur de puissance (12) couplé en aval dudit modulateur ;
une antenne (14) ; et
un réseau accordable d'adaptation d'antenne (13) couplé entre ledit amplificateur de puissance et ladite antenne et configuré pour adapter une impédance de ladite antenne et pour de cette manière commander un changement de phase d'un signal émis qui est produit par ladite antenne ;
ledit processeur étant configuré pour assurer une compensation en amont du changement de phase dans le signal en bande de base, pour correspondre au changement de phase opéré dans le signal émis qui est produit par ladite antenne.

2. Dispositif de communication mobile sans fil selon la revendication 1, comprenant en outre un trajet de réaction entre ledit réseau accordable d'adaptation d'antenne et ledit processeur et configuré pour communiquer le changement de phase opéré dans le signal émis qui est produit par ladite antenne.

3. Dispositif de communication mobile sans fil selon la revendication 1, dans lequel ledit réseau accordable d'adaptation d'antenne est configuré pour adapter dynamiquement l'impédance de ladite antenne.

4. Dispositif de communication mobile sans fil selon la revendication 1, dans lequel ledit processeur est configuré pour fournir la compensation en amont du changement de phase en fonction d'un inverse du changement de phase opéré dans le signal émis qui est produit par ladite antenne.

5. Dispositif de communication mobile sans fil selon la revendication 1, dans lequel ledit processeur est configuré pour fournir la compensation en amont du changement de phase de manière substantiellement simultanée au changement de phase opéré dans le signal émis qui est produit par ladite antenne.

6. Dispositif de communication mobile sans fil selon la revendication 1, dans lequel ledit réseau accordable d'adaptation d'antenne est configuré pour adapter l'impédance de ladite antenne de manière substantiellement instantanée.

7. Dispositif de communication mobile sans fil selon la revendication 1, dans lequel ledit processeur est configuré pour produire des signaux numériques en bande de base en phase (I) et en quadrature (Q).

8. Dispositif de communication mobile sans fil selon la revendication 7, dans lequel ledit modulateur comprend des circuits I et Q couplés entre ledit processeur et ledit amplificateur de puissance.

9. Dispositif de communication mobile sans fil selon la revendication 8, dans lequel chacun desdits circuits I et Q comprend un convertisseur numérique-analogique (15a, 15b), un filtre passe-bas (16a, 16b) couplé à une sortie dudit convertisseur numérique-analogique et un mélangeur (17a, 17b) couplé à une sortie dudit filtre passe-bas.

10. Procédé de fourniture d'une adaptation d'impédance dans un dispositif de communication mobile sans fil (10) comprenant un processeur (11) qui produit un signal en bande de base, un modulateur (25) couplé en aval dudit processeur, un amplificateur de puissance (12) couplé en aval dudit modulateur, une antenne (14) et un réseau accordable d'adaptation d'antenne (13) couplé entre l'amplificateur de puissance et l'antenne, le procédé comprenant les étapes consistant à :
adapter une impédance de ladite antenne à l'aide du réseau accordable d'adaptation d'antenne et, de cette manière, commander un changement de phase d'un signal émis qui est produit par ladite antenne ; et
assurer une compensation en amont du changement de phase dans le signal en bande de base, pour correspondre au changement de phase du signal émis qui est produit par ladite antenne.

11. Procédé selon la revendication 10, comprenant en outre l'étape consistant à utiliser un trajet de réaction entre le réseau accordable d'adaptation d'antenne et le processeur pour communiquer le changement de phase opéré dans le signal émis qui est produit par ladite antenne.

12. Procédé selon la revendication 10, comprenant en outre l'étape consistant à utiliser le réseau accordable d'adaptation d'antenne pour adapter dynamiquement l'impédance de l'antenne.

13. Procédé selon la revendication 10, comprenant en outre l'étape consistant à fournir la compensation en amont du changement de phase en fonction d'un inverse du changement de phase opéré dans le signal émis qui est produit par ladite antenne.

14. Procédé selon la revendication 10, comprenant en outre l'étape consistant à fournir la compensation en amont du changement de phase de manière substantiellement simultanée au changement de phase opéré dans le signal émis qui est produit par ladite antenne.

15. Procédé selon la revendication 10, comprenant en outre l'étape consistant à utiliser le réseau accordable d'adaptation d'antenne pour adapter l'impédance de ladite antenne de manière substantiellement instantanée.
